# EUROPÄISCHE PATENTANMELDUNG

(11) **EP 2 383 493 A1**
(43) Veröffentlichungstag der Anmeldung: **02.11.2011**
(21) Anmeldenummer: 11003413.9
(22) Anmeldetag: 26.04.2011
(51) Int. Cl.: F16H 63/38, F16H 61/24, F16H 63/30, F16H 63/34

(54) **Einteilige Rastierungshülse und Herstellungsverfahren dafür**

(30) Priorität: 28.04.2010 DE 102010018655
(71) Anmelder: Koki Technik Transmission Systems GmbH, 09399 Niederwürschnitz (DE)
(72) Erfinder: Bleicher, Norbert, 07546 Gera (DE); Fuchs, Carsten, 09127 Chemnitz (DE)
(74) Vertreter: Arat, Dogan

(57) **Zusammenfassung**

Rastierungshülse (1) für ein Schaltgetriebe, wobei die Rastierungshülse (1) Halbschalen-förmig ist und eine Schalt-Wähl-Kontur (2) umfasst, wobei die Rastierungshülse (1) zusätzlich zu der Schalt-Wähl-Kontur (2) ein Sperrfenster (5) und/oder eine Kulisse umfasst.

## Beschreibung

### Gebiet der Erfindung

Die Erfindung betrifft eine Rastierungshülse nach dem Hauptanspruch 1, einen Schaltgetriebe und ein Herstellverfahren zum Herstellen einer Rastierungshülse nach den nebengeordneten Ansprüchen,

### Stand der Technik

Aus dem Stand der Technik sind Rastierungshülsen für Schaltgetriebe bekannt. Die Rastierungshülsen weisen verschiedene Merkmale auf, welche dazu dienen, Schaltvorgänge zu ermöglichen, indem die Bewegung einer Schaltwelle auf Schaltgabeln des Schaltgetriebes übersetzt werden.

Übliche Rastierungshülsen sind aus zwei Halbschalen zusammengesetzt und um die Schaltwelle herum angeordnet. Dabei sind üblicherweise auf einer der Halbschalen ausgestanzte Funktionsfenster vorgesehen, um kinematische Randbedingungen für die Bewegung der Schaltwelle und für eine Übertragung der Bewegungen auf die Schaltgabel zu schaffen. Die andere Halbschale solcher üblichen Bauformen von Rastierungshülsan weist hingegen eine Kontur auf, welche dafür sorgt, dass ein mit der Schaltwelle verbundener Schalthebel von alleine in eine bestimmte Ruheposition zurückfindet und welche außerdem dafür sorgt, dass bestimmten Schaltbewegungen bestimmte Widerstände entgegengesetzt werden.

Nachteilig an solchen Rastierungshülsen mit zwei Halbschalen ist, dass sie aufwendig herzustellen sind.

### Offenbarung der Erfindung

Aufgabe der Erfindung ist es, eine Rastierungshülse, ein Schaltgetriebe und ein Verfahren zur Herstellung einer Rastierungshülse anzugeben, welche gegenüber dem Stand der Technik verbessert sind, wobei insbesondere eine einfache Bauweise geschaffen werden soll, welche einfach in der Herstellung ist.

Die Aufgabe wird mit einer Rastierungshülse gemäß Hauptanspruch 1, einem Schaltgetriebe und einem Verfahren zur Herstellung einer Rastierungshülse nach den nebengeordneten Ansprüchen gelöst. Dabei ist anzumerken, dass der Ausdruck "Rastierungshülse" letztlich für eine Halbschale verwendet wird, d.h. dass im Rahmen' dieser Anmeldung auch die Halbschalen-förmige, erfindungsgemäße Rastierungshülse als "Hülse" bezeichnet wird, da sie Funktionen bekannter Rastierungshülsen übernimmt.

Die erfindungsgemäße Rastierungshülse bietet den Vorteil, dass sie mit lediglich einer Halbschale auskommt, um alle notwendigen Funktionen zur Übertragung der Schaltkinernatik von der Schaltwelle auf die Schaltgabeln bereitzustellen. So sind bei besonders bevorzugten Ausführungsformen der Erfindung auf der Halbschalen-förmigen Rastierungshülse eine Schalt-Wähl-Kontur, zumindest ein Sperrfenster und eine Kulisse angeordnet. Dies bietet den Vorteil eines einfachen Aufbaus.

Vorzugsweise wird die Kulisse oder das Sperrfenster der Rastierungshülse In einem Stanzarbeitsgang hergestellt. Stanzen bietet den Vorteil, dass es sich um ein preiswertes Herstellverfahren handelt. Vorzugsweise werden im Rahmen eines typischen Herstellverfahrens der Erfindung beim Schritt des Umformens eines Blechs zum Herstellen der Schalt-Wähl-Kontur gleichzeitig zumindest ein Sperrfenster und/oder eine Kulisse in das Blech gestanzt. Dies bietet den Vorteil, dass die Herstellung besonders schnell und kostengünstig erfolgen kann.

Vorteilhafterweise ist neben dem Sperrfenster zumindest einseitig eine Sperrfläche, bevorzugt sind beidseitig des Sperrfenster Sperrflächen angeordnet. Die Sperrflächen dienen dazu, einen Eingriff in und eine Betätigung von nicht angewählten Schaltgabeln des Schaltgetriebes zu verhindern.

Bei typischen Herstellverfahren der Erfindung weist das Blech nach dem Umformen, insbesondere nach dem einzigen Umform- oder Stanzarbeitsgang, die Halbschalen-Form der Rastierungshülse auf. Dies bietet den Vorteil, dass ein besonders schnelles und einfaches Verfahren zum Herstellen der Rastierungshülse geschaffen ist.

Bevorzugte Rastierungshülsen der Erfindung sind mit einem der beschriebenen bevorzugten Herstellverfahren hergestellt.

Bei bevorzugten Schaltgetrieben der Erfindung ist auf einer Schaltwelle eine Schaltfingereinheit angeordnet. Die Schaltfingereinheit ist vorzugsweise auf der Schaltwelle befestigt und insbesondere ausgebildet, um mit der Halbschalen-förmigen Rastierungshülse zusammenzuwirken oder verbunden zu werden. Auf der Schaltfingereinheit oder an der Schaltwelle ist vorzugsweise die Rastierungshülse befestigt.

Vorzugsweise wird die Rastierungshülse mittels einer mechanischen Verformung oder Umformung der Rastlerungshülse und/oder durch einen Schweißprozess mit der Schaltfingereinheit und/oder der Schaltwelle verbunden. Bevorzugte Verfahren für den Schweißprozess sind Laserschweißen, da es verzugsarm ist, Widerstandspressschweißen, MAG-Schweißen oder ähnliche Verfahren.

Eine Verbindung mittels mechanischer Umformung bietet den Vorteil, dass sie besonders einfach zu realisieren ist. Schweißverfahren bieten den Vorteil, dass sie eine dauerhafte Verbindung auf Materialebene schaffen. Vorzugsweise sind die Schaltwelle, die Schaltfingereinheit und die Rastierungshülse form- und kraftschlüssig verbunden. Besonders bevorzugt ist die Schaltfingereinheit das Verbindungsglied für die Rastierungshülse zur Schaltwelle, d.h. dass die Rastlerungshülse nicht direkt mit der Schaltwelle verbunden ist, sondern über die Schaltfingereinheit mit der Schaltwelle verbunden ist. Die erfindungsgemäße Rastierungshülse bietet den Vorteil, dass alle Funktionen einer Rastierungshülse in der Halbschale integriert sind.

Dabei bietet die Halbschalen-förmige Rastierungshülse mit sämtlichen oben angesprochenen Funktionen wie Schalt-Wähl-Kontur, Sperrfenster und Kulisse den Vorteil, dass wesentliche Funktionsmaße und -bezüge in einem gemeinsamen Arbeitsgang hergestellt werden und dadurch die fügeprozessbedingten Schwankungen ausgeschlossen werden können. Dies erleichtert ebenfalls den Herstellprozess.

### Kurze Beschreibung der Zeichnungen

Nachfolgend wird die Erfindung anhand der beiliegenden Zeichnungen näher erläutert, wobei die Zeichnungen zeigen:
- Fig. 1: zeigt eine erfindungsgemäße Rastierungshülse in einer schematischen perspektivischen Ansicht; und
- Fig. 2: zeigt eine Kombination einer Schaltwelle, einer Schaltfingereinheit und der Rastierungshülse nach Fig. 1 in einer erfindungsgemäßen Anordnung.

### Beschreibung bevorzugter Ausführungsbeispiele

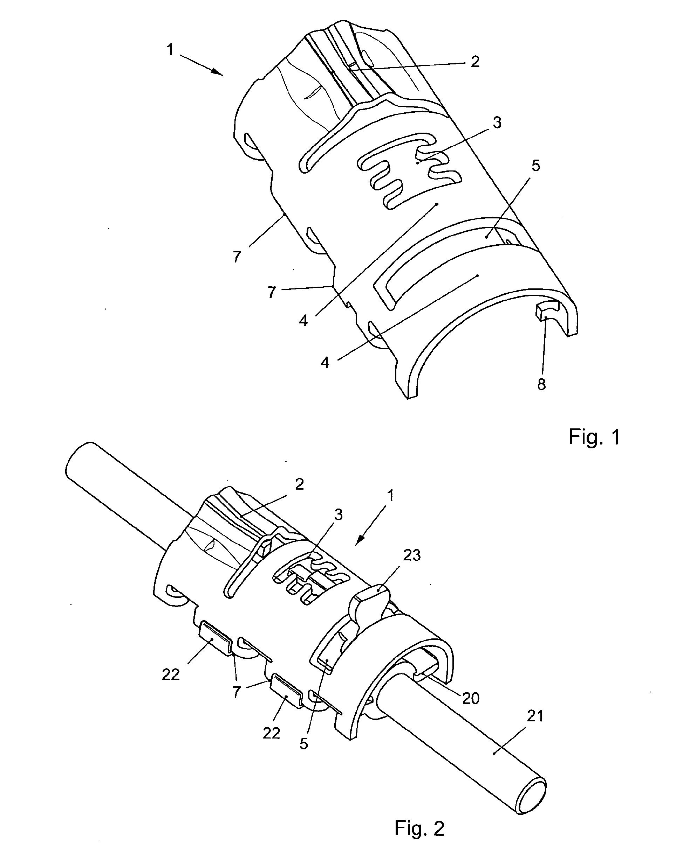

In der Fig. 1 ist eine erfindungsgemäße Rastierungshülse 1 in einer schematischen perspektivischen Ansicht gezeigt. Die Rastierungshülse 1 weist eine Halbschalenform auf, in welche verschiedene funktionale Elemente eingeformt sind,

So umfasst die Rastierungshülse 1 eine Schalt-Wähl-Kontur 2, welche im Zusammenspiel mit einem federbelasteten Element, welches über die Kontur gleitet oder rollt, dazu geeignet ist, bestimmten Bewegungen einer Schaltwelle bestimmte Widerstände entgegenzusetzen oder diese zu unterstützen. Weiter umfasst die Rastierungshülse 1 eine Kulisse 3, die dazu vorgesehen ist, im Zusammenspiel mit einem Eingreifelement (nicht dargestellt) Bewegungen der Rastierungshülse auf bestimmte Kinematiken zu begrenzen. Zwei Sperrflächen 4 der Rastierungshülse 1 dienen dazu, eine Betätigung von Schaltgabeln (nicht dargestellt), die zu Gängen des Schaltgetriebes gehören, welche bei einer bestimmten Lage der Rastierungshülse nicht betätigt werden sollen, zu verhindern. Zwischen den beiden Sperrflächen 4 ist ein Sperrfenster 5 angeordnet, durch welches ein Schaltfinger einer Schaltfingereinheit (siehe Fig. 2) hindurch greift, um Schaltgabeln zu betätigen.

Außerdem umfasst die Rastierungshülse 1 Befestigungsbereiche 7, welche dazu vorgesehen sind, mit einer Schaftfingereinheit durch mechanisches Umformen oder durch Schweißen verbunden zu werden. Ebenso weist die Rastierungshülse 1 zumindest eine Befestigungslasche 8 auf, welche dazu geeignet ist, eine Verbindung zwischen einer Schaltfingereinheit und der Rastierungshülse 1 herzustellen.

In der Fig. 2 ist eine erfindungsgemäße Anordnung einer Rastierungshülse 1, einer Schaltfingereinheit 20 und einer Schaltwelle 21 gezeigt. Ergänzend sollte angemerkt werden, dass im Zusammenhang mit der Figurenbeschreibung der Fig. 2 nicht alle Merkmale der RastierungshUlse 1 der Fig. 1 nochmals erläutert werden. Hierzu wird auf die Beschreibung der Fig. 1 verwiesen.

Die Rastierungshülse 1 ist an dem Befestigungsbereich 7 mit der Schaltfingereinheit 20 kraft- und formschlüssig über Befestigungsnasen 22 verbunden oder verschweißt. Ebenso ist die Befestigungslasche 8 (in der Fig. 2 nicht zu sehen) in Eingriff mit einer Platte der Schaltfingereinheit 20.

Die Schaftfingereinheit 20 wiederum ist drehfest auf der Schaltwelle 21 befestigt. Die Schaltfingereinheit 20 umfasst außerdem einen Schaltfinger 23, welcher durch das Sperrfenster 5 der Rastierungshülse 1 greift. Der Schaltfinger 23 dient dazu, Schaltgabel des Getriebes zu betätigen.

Bei erfindungsgemäßen Verfahren zur Herstellung der Rastierungshülse 1 werden während des Stanzprozesses die Schalt-Wähl-Kontur 2, die Kulisse 3 und das Sperrfenster 5 hergestellt. Bevorzugt werden das Sperrfenster 5 und die Kulisse 3 gestanzt. Durch die beschriebenen Maßnahmen wird der Bearbeitungsaufwand zum Herstellen der Rastierungshülse drastisch vermindert.

## Patentansprüche

1. Rastierungshülse (1) für ein Schaltgetriebe, wobei die Rastierungshülse (1) Halbschalen-förmig ist und eine Schalt-Wähl-Kontur (2) umfasst,
**dadurch gekennzeichnet, dass**
die Rastierungshülse (1) zusätzlich zu der Schalt-Wähl-Kontur (2) ein Sperrfenster (5) und/oder eine Kulisse umfasst.

2. Rastierungshülse (1) nach Anspruch 1, **gekennzeichnet durch** eine neben dem Sperrfenster (5) angeordnete Sperrfläche (4).

3. Rastierungshülse (1) nach Anspruch 1 oder 2, **dadurch gekennzeichnet, dass** die Schal-Wähl-Kontur, die Kulisse (3) und das Sperrfenster (5) In einem einzigen Stanzarbeitsgang hergestellt sind.

4. Schaltgetriebe mit einer Schaltwelle (21), einer auf der Schaltwelle (21) angeordneten Schaltfingereineit (20) und einer Rastierungshülse (1) nach einem der Ansprüche 1 bis 3.

5. Schaltgetriebe nach Anspruch 4, **dadurch gekennzeichnet, dass** die Rastierungshülse (1) an der Schaltfingereinheit (20) befestigt ist.

6. Schaltgetriebe nach Anspruch 4 oder 5, **dadurch gekennzeichnet, dass** die Rastlerungsholse (1) mittels einer mechanischen Umformung und/oder mittels einer Schweißnaht an der Schaltwelle (21) und/oder an der Schaltfingereinheit (20) befestigt ist.

7. Herstellverfahren zum Herstellen einer Rastierungshülse (1) mit den Schritten:
- Bereitstellen eines Blechs, und
- Umformen des Blechs, um eine Schalt-Wähl-Kontur (2) in dem Blech zu schaffen,
**dadurch gekennzeichnet, dass**
bei dem Schritt des Umformens gleichzeitig ein Sperrfenster (5) und/oder eine Kulisse (3) in das Blech gestanzt werden.

8. Herstellverfahren nach Anspruch 7, **dadurch gekennzeichnet, dass** das Blech nach dem Umformen eine Halbschalen-Form aufweist.

9. Rastierungshülse (1) nach einem der Ansprüche 1 bis 3, hergestellt mit einem Verfahren nach Anspruch 7 oder 8.
